# DEMANDE DE BREVET EUROPEEN

(11) **EP 0 865 220 A1**
(43) Date de publication de la demande: **16.09.1998**
(21) Numéro de dépôt: 98400583.5
(22) Date de dépôt: 12.03.1998
(51) Int. Cl.: H04Q 7/36

(54) **Procédé de configuration de cellules dans un système de radiocommunication numérique cellulaire**

(30) Priorité: 13.03.1997 FR 9702995
(71) Demandeur: ALCATEL ALSTHOM COMPAGNIE GENERALE D'ELECTRICITE, 75008 Paris (FR)
(72) Inventeur: Kumar, Vinod, 75005 Paris (FR)
(74) Mandataire: El Manouni, Josiane

(57) **Abrégé**

L'invention concerne un procédé de configuration d'une pluralité de cellules géographiques liées à un même site d'émission/réception d'un système de radiocommunication numérique cellulaire. Le site est du type accueillant une pluralité de stations de base associées chacune à une des cellules et définies chacune par une porteuse BCCH distincte. Le site est situé dans une zone pouvant être décomposée en une couronne interne, présentant une première densité de trafic, et au centre de laquelle se trouve le site d'émission/réception, et une couronne externe, présentant une seconde densité de trafic inférieure à la première densité de trafic, et entourant la couronne interne.

Selon l'invention, le trafic de la couronne externe est supporté par au moins deux premières stations de base (BTS 1 à BTS 4) associées chacune à une cellule sectorisée. Chaque première station de base comprend une antenne (A1 à A4), directive et de grande portée, connectée directement à un unique premier dispositif d'émission/réception (TRx 1 à TRx 4), le premier dispositif d'émission/réception comprenant un émetteur (Tx 1 à Tx 4) utilisant la porteuse BCCH (f_{BCCH,1} à f_{BCCH,4}) propre à la première station de base.

L'invention concerne également le site d'émission/réception en tant que tel, avec les différents moyens qu'il comprend.

## Description

Le domaine de l'invention est celui des systèmes de radiocommunication numériques cellulaires avec des mobiles, tels que ceux conçus selon le standard de radiotélécommunication public GSM.

Par standard GSM on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne un procédé de configuration d'une pluralité de cellules géographiques liées à un même site d'émission/réception couvrant une zone de grandes dimensions (plusieurs dizaines de kilomètres) et à faible densité de trafic, dans un système de radiocommunication numérique cellulaire. L'invention concerne également un tel site d'émission/réception.

D'une façon générale, un système de radiocommunication numérique cellulaire est mis en oeuvre au sein d'un réseau de cellules géographiques parcouru par des stations mobiles. Une station de base et une seule (BTS, pour Base Transceiver Station en langue anglaise) est associée à chaque cellule, et une station mobile communique par l'intermédiaire de la station de base associée à la cellule dans laquelle elle se trouve.

Chaque station de base (et donc chaque cellule) utilise en émission une porteuse radio, dite porteuse BCCH, qui lui est propre et qui lui fournit notamment un canal de diffusion BCCH (pour Broadcast Control CHannel en langue anglaise) et, avec sa porteuse de réception associée, des canaux de trafic TCH bidirectionnels (pour Traffic CHannel en langue anglaise).

Chaque station de base comprend généralement une seule antenne.

Si le nombre de canaux de trafic TCH fournis par la porteuse BCCH et sa porteuse associée est suffisant pour écouler le trafic prévu dans la cellule, l'antenne de la station de base est connectée directement à un unique dispositif d'émission/réception (TRx) qui comprend un émetteur (Tx) utilisant la porteuse BCCH (pour la voie descendante) et un récepteur (Rx) permettant de recevoir la porteuse associée à la porteuse BCCH (pour la voie montante).

Si le nombre de canaux de trafic TCH fournis par la porteuse BCCH et sa porteuse associée n'est pas suffisant pour écouler le trafic prévu dans la cellule, la station de base utilise un ou plusieurs autres couples de porteuses qui lui fournissent des canaux de trafic TCH supplémentaires. Dans ce cas, l'antenne de la station de base est connectée en outre à une pluralité de dispositifs d'émission/réception (TRx) supplémentaires. Chacun de ces derniers comprend un émetteur (Tx) utilisant une porteuse distincte de la porteuse BCCH (pour la voie descendante) et un récepteur (Rx) permettant de recevoir la porteuse associée (pour la voie montante). La connexion de l'antenne aux différents dispositifs d'émission/réception (TRx), à savoir celui utilisant la porteuse BCCH et tous les autres utilisant des porteuses distinctes de cette porteuse BCCH, est effectuée via un combineur de puissance. Un même récepteur peut être commun à tous les dispositifs d'émission/réception (TRx) reliés à une même antenne. Selon une autre structure, chaque dispositifs d'émission/réception (TRx) possède son propre récepteur.

Dans la terminologie des systèmes de radiocommunication numérique cellulaire, et notamment dans la terminologie GSM, on distingue les notions de cellule géographique et de site d'émission/réception.

En effet, dans le cas le plus simple, un site d'émission/réception accueille une seule station de base, et correspond donc à l'unique cellule (généralement omnidirectionnelle) associée à cette station de base.

Mais parfois, un site d'émission/réception peut accueillir une pluralité de stations de base. Dans ce cas, le même site d'émission/réception correspond donc à une pluralité de cellules (généralement sectorisées) associées chacune à une des stations de base.

La présente invention se place dans un contexte particulier, à savoir celui où un site d'émission/réception est situé dans une zone de grandes dimensions (plusieurs dizaines de kilomètres), pouvant être décomposée en :
- une couronne interne à faible densité de trafic (correspondant par exemple aux besoins d'environ un millier d'abonnés), au centre de laquelle se trouve le site d'émission/réception, et
- une couronne externe à très faible densité de trafic (correspondant par exemple aux besoins de quelques centaines d'abonnés), entourant la couronne interne.

La couronne interne correspond par exemple à une zone suburbaine, industrielle ou résidentielle, à faible densité de trafic. Dans ce cas, la couronne externe correspond aux vastes étendues environnantes (plusieurs dizaines de kilomètres), où la densité de trafic est encore plus faible.

Actuellement, lorsqu'il est nécessaire d'assurer la couverture radio d'une zone de grandes dimensions (plusieurs dizaines de kilomètres) et à faible densité de trafic, on met en oeuvre : soit un site d'émission/réception accueillant une unique station de base associée à une unique cellule omnidirectionnelle, soit un site d'émission/réception accueillant une pluralité de stations de base associées à une pluralité de cellules sectorisées.

Quel que soit le nombre de stations de base que le site d'émission/réception accueille, les cellules présentent toujours des superficies importantes. La solution classique consiste donc à utiliser des stations de base dont les émetteurs (Tx) comprennent des amplificateurs à très grande puissance (afin de couvrir toute la surface de chaque cellule), et dont les récepteurs (Rx) possèdent des plages dynamiques très grandes (dans une même cellule, une station mobile pouvant être proche ou bien éloignée du site).

De plus, chaque station de base doit généralement utiliser plusieurs porteuses pour pouvoir supporter le trafic de toute la cellule de grande superficie à laquelle elle est associée. En d'autres termes, chaque station de base doit presque toujours comprendre plusieurs dispositifs d'émission/réception (TRx).

Une conséquence de cette multiplicité de porteuses est que, dans chaque station de base, un combineur de puissance doit être utilisé pour connecter l'antenne aux différents dispositifs d'émission/réception (TRx). Ceci est très gênant car un tel combineur de puissance introduit des pertes importantes (de 3 à 5 dB environ) qu'il convient de compenser en augmentant la puissance, déjà élevée, que doit présenter l'amplificateur à l'émission.

Une autre conséquence de cette multiplicité de porteuses est que le récepteur unique (Rx) (si c'est cette structure qui est adoptée), commun à tous les dispositifs d'émission/réception (TRx) reliés à l'antenne, doit être large bande de façon à permettre la réception de toutes les porteuses (BCCH et autres).

La solution classique précitée, surtout si chaque station de base utilise plusieurs porteuses, est très coûteuse d'un point de vue matériel. En effet, les amplificateurs à très grande puissance sont des dispositifs très coûteux et peu fiables. De plus, les récepteurs possédant à la fois une large bande passante et une grande plage dynamique d'entrée sont eux aussi très coûteux.

L'invention a notamment pour objectif de pallier ces différents inconvénients de l'état de la technique.

Plus précisément, l'un des objectifs de la présente invention est de fournir un procédé de configuration d'une pluralité de cellules géographiques liées à un même site d'émission/réception couvrant une zone de grandes dimensions et à faible densité de trafic, ce procédé permettant de réduire les coûts des dispositifs d'émission/réception (TRx) compris dans les stations de base.

L'invention a également pour objectif de fournir un tel procédé permettant d'optimiser la quantité et le coût du matériel utilisé dans chaque station de base, en prenant en compte la répartition géographique de la densité de trafic sur la zone couverte par le site d'émission/réception.

Ces différents objectifs, ainsi que d'autres qui apparaîtront par la suite, sont atteints selon l'invention à l'aide d'un procédé de configuration d'une pluralité de cellules géographiques liées à un même site d'émission/réception dans un système de radiocommunication numérique cellulaire, ledit site d'émission/réception accueillant une pluralité de stations de base associées chacune à une desdites cellules et définies chacune par une porteuse radio distincte, dite porteuse BCCH, fournissant notamment un canal de diffusion, ledit site d'émission/réception étant situé dans une zone pouvant être décomposée en :
- une couronne interne présentant une première densité de trafic, et au centre de laquelle se trouve ledit site d'émission/réception,
- une couronne externe présentant une seconde densité de trafic inférieure à ladite première densité de trafic, et entourant ladite couronne interne,
caractérisé en ce que le trafic de ladite couronne externe est supporté par au moins deux premières stations de base associées chacune à une cellule sectorisée,
et en ce que chaque première station de base comprend une antenne, directive et de grande portée, qui est connectée directement à un unique premier dispositif d'émission/réception, ledit premier dispositif d'émission/réception comprenant un émetteur utilisant la porteuse BCCH propre à ladite première station de base.

Le principe général de l'invention consiste donc à utiliser, pour assurer la couverture radio de la couronne externe, des stations de base dont l'antenne n'est connectée qu'à un seul dispositif d'émission/réception (TRx).

De cette façon, on évite l'utilisation d'un combineur de puissance (qui classiquement permet de connecter l'antenne à une pluralité de dispositifs d'émission/réception). Dans l'émetteur (Tx) de ce seul dispositif d'émission/réception, l'amplificateur peut donc être de moindre puissance - et donc de moindre coût - que ceux généralement utilisés, puisqu'il n'a pas à compenser les pertes induites par le combineur.

Préférentiellement, le trafic de ladite couronne externe est supporté par quatre premières stations de base, associées chacune à une cellule sectorisée à 90°.

Dans un premier mode de réalisation avantageux de l'invention, le trafic de ladite couronne interne est supporté par une seule seconde station de base associée à une cellule omnidirectionnelle, lesdites au moins deux premières stations de base ne participant pas au support du trafic de ladite couronne interne.

Ainsi, cette seconde cellule omnidirectionnelle chevauche les cellules sectorisées sur la couronne interne et supporte entièrement le trafic sur cette couronne interne. La seconde station de base associée à cette cellule omnidirectionnnelle utilise bien sûr une porteuse BCCH qui lui est propre.

On notera également que dans l'émetteur (Tx) du ou de chaque dispositif d'émission/réception (TRx), l'amplificateur peut être de moindre puissance - et donc de moindre coût - que ceux généralement utilisés, puisqu'il ne vise à couvrir qu'une cellule de taille réduite (correspondant à la surface de la couronne interne).

De façon avantageuse, ladite seconde station de base associée à ladite cellule omnidirectionnelle comprend une antenne, omnidirectionnelle et de faible portée, qui est connectée:
- soit directement à un unique second dispositif d'émission/réception comprenant un émetteur utilisant la porteuse BCCH propre à ladite seconde station de base ;
- soit, via un combineur, à :
   * un second dispositif d'émission/réception comprenant un émetteur utilisant la porteuse BCCH propre à ladite seconde station de base, et
   * au moins un troisième dispositif d'émission/réception comprenant un émetteur utilisant une porteuse distincte de la porteuse BCCH propre à ladite seconde station de base.

Le nombre de dispositif d'émission/réception (TRx) compris dans la seconde station de base dépend du trafic à assurer dans la couronne interne. Il est clair que si un seul dispositif d'émission/réception suffit, on évite l'utilisation d'un combineur de puissance et dans l'émetteur de ce seul dispositif d'émission/réception, l'amplificateur peut donc être encore de moindre puissance - et donc encore de moindre coût - que ceux généralement utilisés.

Avantageusement, lesdites au moins deux premières stations de base font partie d'un premier ensemble de cellules, ladite seconde station de base faisant partie d'un second ensemble de cellules distinct dudit premier ensemble de cellules.

Il est à noter que les premier et second ensembles de cellules distinct sont distincts uniquement du point de vue radio, mais il est clair que si nécessaire ou si cela est possible, les deux ensembles de cellules peuvent se connecter à un même contrôleur de stations de bases (BSC).

Préférentiellement, lesdits premier et second ensembles de cellules utilisent chacun un jeu de fréquences distinct. De cette façon, malgré que la cellule omnidirectionnelle et les cellules sectorisées se chevauchent sur la couronne interne, on évite tout problème d'interférence entre ces deux types de cellule.

Dans un second mode de réalisation avantageux de l'invention, lesdites premières stations de base supportent également le trafic de ladite couronne interne, chaque première station de base comprenant en outre à cet effet une antenne supplémentaire, directive et de faible portée, qui est connectée à au moins un second dispositif d'émission/réception comprenant un émetteur utilisant une porteuse distincte de ladite porteuse BCCH propre à ladite première station de base.

Ainsi, chaque cellule sectorisée comporte une première partie, dite partie interne, couvrant une zone de la couronne interne et une seconde partie, dite partie externe, couvrant une zone de la couronne externe. La station de base de chaque cellule sectorisée assure le trafic :
- d'une part dans la partie externe de la cellule, grâce à l'antenne à laquelle est connecté l'unique premier dispositif d'émission/réception, et
- d'autre part dans la partie interne de la cellule, grâce à l'antenne supplémentaire à laquelle est connecté un ou plusieurs seconds dispositifs d'émission/réception.

On notera que la porteuse BCCH utilisée par l'unique premier dispositif d'émission/réception est unique pour toute la cellule et couvre donc aussi bien la partie externe que la partie interne de la cellule sectorisée. En d'autres termes, dans chaque station de base, le ou les seconds dispositifs d'émission/réception permettant d'assurer le trafic dans la partie interne de la cellule n'utilisent aucune autre porteuse BCCH que celle utilisée par l'unique premier dispositif d'émission/réception.

On notera également que dans l'émetteur du ou de chaque second dispositif d'émission/réception, l'amplificateur peut être de moindre puissance - et donc de moindre coût - que ceux généralement utilisés, puisqu'il ne vise à couvrir qu'une partie de cellule de taille réduite (correspondant à la partie interne de la cellule).

De façon avantageuse, ladite antenne supplémentaire est connectée :
- soit directement à un unique second dispositif d'émission/réception ;
- soit, via un combineur, à au moins deux seconds dispositifs d'émission/réception.

Le nombre de second dispositif d'émission/réception compris dans chaque station de base dépend du trafic à assurer dans la couronne interne. Il est clair que si un seul second dispositif d'émission/réception suffit, on évite l'utilisation d'un combineur de puissance et, dans l'émetteur de ce seul second dispositif d'émission/réception, l'amplificateur peut donc être encore de moindre puissance - et donc encore de moindre coût - que ceux généralement utilisés.

Préférentiellement, la plage dynamique des signaux reçus au niveau dudit site est divisée en deux sous-plages dynamiques se chevauchant, à savoir :
- une sous-plage dynamique basse, pour la réception de signaux émis par une station mobile se trouvant dans ladite couronne externe,
- une sous-plage dynamique haute, pour la réception de signaux émis par une station mobile se trouvant dans ladite couronne interne,
et ledit premier dispositif d'émission/réception de chacune desdites premières stations de base, permettant de supporter le trafic de ladite couronne externe, comprend un premier récepteur réglé sur ladite sous-plage dynamique basse.

Ainsi, on évite l'utilisation d'un récepteur possédant une grande plage dynamique. En effet, ce premier récepteur étant prévu pour recevoir des signaux provenant de stations mobiles se trouvant dans la couronne externe, on peut se contenter d'utiliser la seule plage dynamique basse. Ce premier récepteur est donc beaucoup moins cher que ceux généralement utilisés.

Avantageusement, dans le cas du premier mode de réalisation de l'invention, ladite seconde station de base, qui supporte le trafic de ladite couronne interne, comprend un second récepteur réglé sur ladite sous-plage dynamique haute.

A nouveau, on évite l'utilisation d'un récepteur possédant une grande plage dynamique. En effet, ce second récepteur étant prévu pour recevoir des signaux provenant de stations mobiles se trouvant dans la couronne interne, on peut se contenter d'utiliser la seule plage dynamique haute. Ce second récepteur est donc beaucoup moins cher que ceux généralement utilisés.

Préférentiellement, ledit second récepteur est :
- soit compris dans ledit unique second dispositif d'émission/réception de ladite seconde station de base ;
- soit large bande et commun à l'ensemble desdits second et troisième dispositifs d'émission/réception de ladite seconde station de base.

On notera que le second récepteur est obligatoirement large bande s'il est commun à plusieurs dispositifs d'émission/réception qui utilisent différentes porteuses.

Avantageusement, dans le cas du second mode de réalisation de l'invention, chaque première station de base comprend également :
- dans ledit unique premier dispositif d'émission/réception, un second récepteur réglé sur ladite sous-plage dynamique haute,
- dans ledit au moins un second dispositif d'émission/réception, un troisième récepteur réglé sur ladite sous-plage dynamique haute,
et chaque première station de base comprend également des moyens de détecter, à partir de signaux émis par une station mobile et reçus par l'un desdits premier et second récepteurs, dans quelle couronne, interne ou externe, se trouve ladite station mobile, de façon à allouer à celle-ci :
- soit un canal de trafic supporté par le premier dispositif d'émission/réception et utilisant ledit premier récepteur, si elle se trouve dans ladite couronne externe,
- soit un canal de trafic supporté par ledit au moins un second dispositif d'émission/réception et utilisant ledit troisième récepteur, si elle se trouve dans ladite couronne interne.

Là encore, on évite l'utilisation d'un récepteur possédant une grande plage dynamique. En effet, ce second récepteur étant prévu pour recevoir des signaux provenant de stations mobiles se trouvant dans la couronne interne (c'est-à-dire dans la partie interne de la cellule), on peut se contenter d'utiliser la seule plage dynamique haute. Ce second récepteur est donc beaucoup moins cher que ceux généralement utilisés.

Préférentiellement, ledit troisième récepteur est :
- soit compris dans ledit unique second dispositif d'émission/réception connecté à ladite antenne supplémentaire ;
- soit large bande et commun à l'ensemble desdits seconds dispositifs d'émission/réception connectés via le combineur à ladite antenne supplémentaire.

De façon préférentielle, l'ensemble des porteuses utilisées au niveau dudit site est divisé en deux sous-ensembles de porteuses, à savoir :
- un premier sous-ensemble de porteuses, incluant les porteuses utilisées dans ladite couronne externe, et notamment les porteuses BCCH propres auxdites premières stations de base,
- un second sous-ensemble de porteuses, incluant les porteuses utilisées dans ladite couronne interne, et notamment les porteuses distinctes desdites porteuses BCCH propres auxdites premières stations de base,
ledit premier récepteur de chacune desdites premières stations de base permettant la réception des porteuses dudit premier sous-ensemble de porteuses.

Ainsi, on évite l'utilisation d'un récepteur possédant une large bande passante. En effet, le premier récepteur est prévu pour recevoir uniquement les porteuses du premier sous-ensemble de porteuses. De cette façon, le premier récepteur est beaucoup moins cher que ceux généralement utilisés (s'il s'agit de récepteurs large bande).

Avantageusement, dans le cas du premier mode de réalisation de l'invention, ledit second récepteur compris dans ladite seconde station de base permet la réception des porteuses dudit second sous-ensemble de porteuses.

A nouveau, on évite l'utilisation d'un récepteur possédant une large bande passante.

Avantageusement, dans le cas du second mode de réalisation de l'invention, ledit second récepteur de chaque première station de base permet la réception des porteuses dudit premier sous-ensemble de porteuses,
et ledit troisième récepteur de chaque seconde station de base permet la réception des porteuses dudit second sous-ensemble de porteuses.

On notera que dans ce cas, le second et le troisième récepteurs participent tous les deux au support du trafic dans la couronne interne. Le second récepteur permet la réception des porteuses BCCH propres aux premières stations de base (ces porteuses BCCH étant ici utilisées aussi bien dans la couronne interne que dans la couronne externe). Le troisième récepteur permet la réception des autres porteuses (ces autres porteuses étant utilisées uniquement dans la couronne interne).

L'invention concerne également un site d'émission/réception dans un système de radiocommunication numérique cellulaire, ledit site d'émission/réception étant du type accueillant une pluralité de stations de base associées chacune à une desdites cellules et définies chacune par une porteuse radio distincte, dite porteuse BCCH, fournissant notamment un canal de diffusion, ledit site d'émission/réception étant situé dans une zone pouvant être décomposée en une couronne interne, présentant une première densité de trafic et au centre de laquelle se trouve ledit site d'émission/réception, et une couronne externe, présentant une seconde densité de trafic inférieure à ladite première densité de trafic et entourant ladite couronne interne,
caractérisé en ce qu'il comprend au moins deux premières stations de base associées chacune à une cellule sectorisée, de façon à supporter le trafic de ladite couronne externe, et en ce que chacune desdites premières stations de base comprend une antenne, directive et de grande portée, qui est connectée directement à un unique premier dispositif d'émission/réception comprenant un émetteur utilisant la porteuse BCCH propre à ladite première station de base.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente de façon schématique un exemple de configuration, selon un premier mode de réalisation du procédé de l'invention, de 5 cellules géographiques liées à un même site d'émission/réception ;
- la figure 2 présente de façon schématique les différentes stations de base comprises dans le site d'émission/réception de la figure 1 ;
- la figure 3 présente de façon schématique un exemple de configuration, selon un second mode de réalisation du procédé de l'invention, de 4 cellules géographiques liées à un même site d'émission/réception ; et
- la figure 4 présente de façon schématique les différentes stations de base comprises dans le site d'émission/réception de la figure 3.

L'invention concerne donc un procédé de configuration d'une pluralité de cellules géographiques liées à un même site d'émission/réception d'un système de radiocommunication numérique cellulaire.

Dans la suite de la description, on considère que le système de radiocommunication numérique cellulaire est du type GSM. Il est clair cependant que l'invention n'est pas limitée à ce type particulier de système.

De façon classique, le site d'émission/réception accueille une pluralité de stations de base associées chacune à une cellule et définies chacune par une porteuse radio distincte, dite porteuse BCCH.

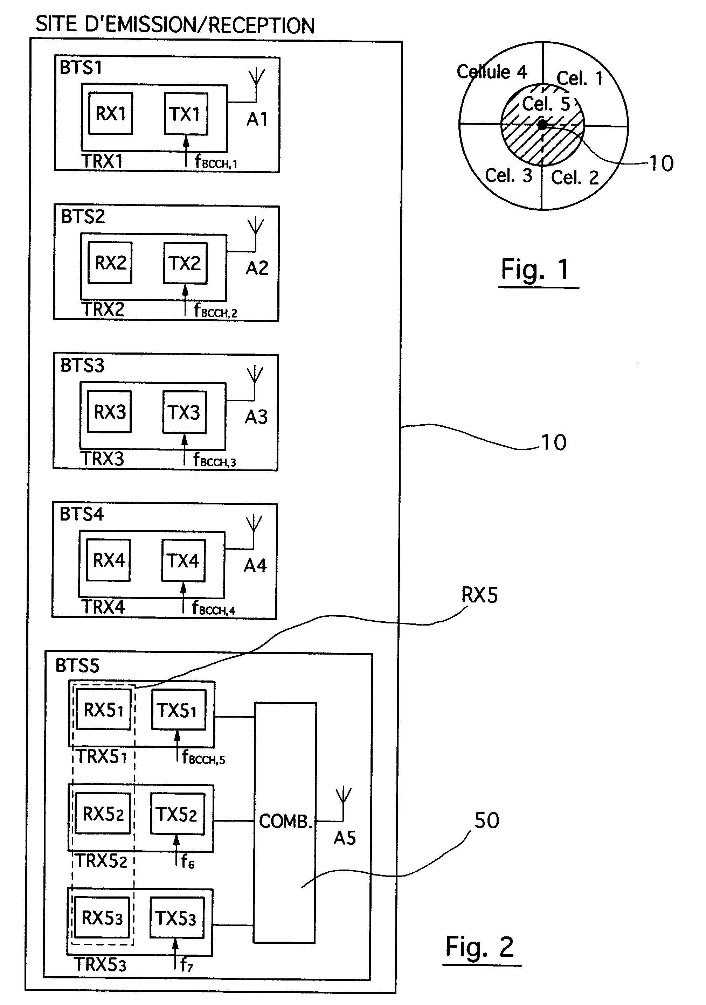

Par hypothèse, le site d'émission/réception est situé dans une zone pouvant être décomposée en :
- une couronne interne (surface hachurée sur les figures 1 et 2) présentant une première densité de trafic de valeur moyenne, et au centre de laquelle se trouve le site d'émission/réception,
- une couronne externe présentant une seconde densité de trafic inférieure à la première densité de trafic, et entourant la couronne interne.

Selon l'invention, le trafic de la couronne externe est supporté par des premières stations de base BTS 1 à BTS 4 associées chacune à une cellule sectorisée CELLULE 1 à CELLULE 4 et comprenant chacune un unique premier dispositif d'émission/réception TRx 1 à TRx 4 connecté directement à une antenne A1 à A4 directive et de grande portée.

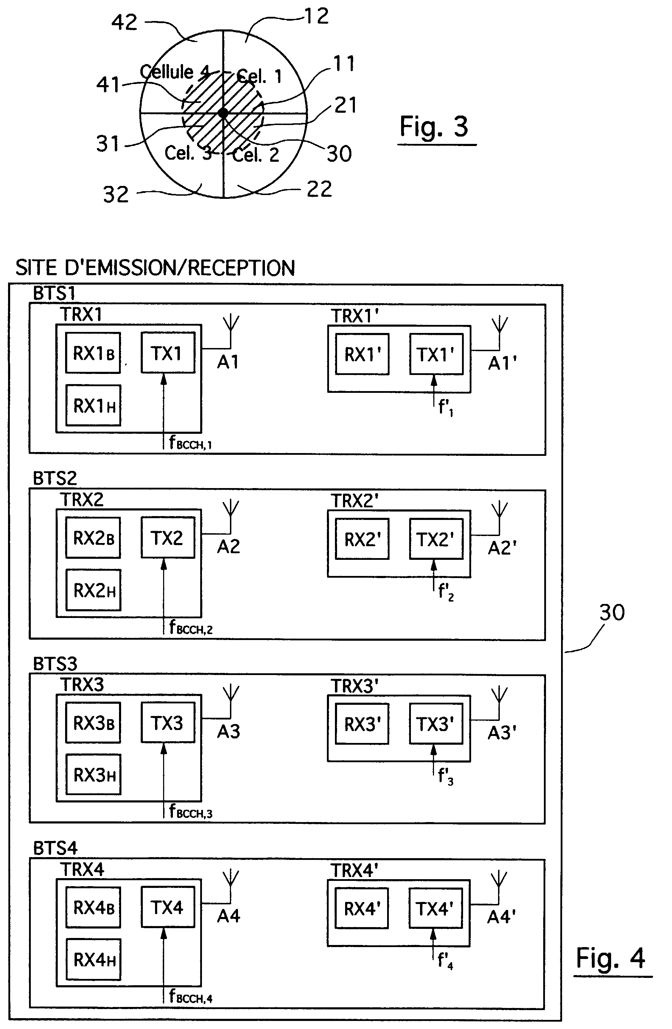

L'unique premier dispositif d'émission/réception TRx 1 à TRx 4 de chaque première station de base BTS 1 à BTS 4 comprend notamment :
- un émetteur Tx 1 à Tx 4 utilisant une porteuse BCCH f_{BCCH, 1} à f_{BCCH, 4} propre à cette première station de base, et
- un premier récepteur Rx 1 à Rx 4 (fig.2), Rx 1_{B} à Rx 4_{B} (fig.4).

Ainsi le principe général de l'invention consiste à n'utiliser aucun combineur de puissance dans les premières stations de base assurant le trafic de la couronne externe. De cette façon, la puissance exigée de ces émetteurs Tx 1 à Tx 4 est plus faible que celle exigée des émetteurs généralement utilisés. Par conséquent, ces émetteurs Tx 1 à Tx 4 sont moins coûteux que les émetteurs classiques.

Dans les premier et second modes de réalisation du procédé de l'invention, présentés ci-dessous, en relation avec les figures 1-2 et 3-4 respectivement, le trafic de la couronne externe est supporté par quatre premières stations de base BTS 1 à BTS 4, associées chacune à une cellule sectorisée à 90° CELLULE 1 à CELLULE 4.

Il est clair cependant que le procédé de l'invention peut s'appliquer quel que soit le nombre (supérieur à 2) de cellules couvrant la couronne externe, c'est-à-dire quel que soit le nombre (supérieur à 2) de premières stations de base supportant le trafic dans cette couronne externe.

Afin de réduire encore les coûts en matériel, on peut limiter la plage dynamique d'entrée et/ou les porteuses pouvant être reçues par le premier récepteur Rx 1 à Rx 4 (fig.2), Rx 1_{B} à Rx 4_{B} (fig.4) de l'unique premier dispositif d'émission/réception TRx 1 à TRx 4 de chaque première station de base BTS 1 à BTS.

Pour pouvoir limiter la plage dynamique d'entrée des premiers récepteurs, on divise la plage dynamique des signaux reçus au niveau du site 10, 30 en deux sous-plages dynamiques se chevauchant, à savoir :
- une sous-plage dynamique basse, pour la réception de signaux émis par une station mobile se trouvant dans la couronne externe,
- une sous-plage dynamique haute, pour la réception de signaux émis par une station mobile se trouvant dans la couronne interne.

On peut alors limiter la plage dynamique d'entrée de chaque premier récepteur Rx 1 à Rx 4 (fig.2), Rx 1_{B} à Rx 4_{B} (fig.4), à la sous-plage dynamique basse, puisque ce premier récepteur est destiné à recevoir uniquement des signaux provenant de stations mobiles se trouvant dans la couronne externe.

Pour pouvoir limiter les porteuses pouvant être reçues par les premiers récepteurs, on divise les porteuses utilisées au niveau du site 10, 30 en deux sous-ensembles de porteuses, à savoir :
- un premier sous ensemble de porteuses, incluant les porteuses utilisées dans la couronne externe, et notamment les porteuses BCCH f_{BCCH, 1} à f_{BCCH, 4} propres aux premières stations de base BTS 1 à BTS 4,
- un second sous-ensemble de porteuses, incluant les porteuses utilisées dans la couronne interne, et notamment les porteuses f_{BCCH, 5} et f₆ (fig.2) et f'₁ à f'₄ (fig.4), distinctes des porteuses BCCH propres aux premières stations de base.

On peut alors limiter les porteuses pouvant être reçues par chaque premier récepteur Rx 1 à Rx 4 (fig.2), Rx 1_{B} à Rx 4_{B} (fig.4), au premier sous-ensemble de porteuses.

Les deux modes de réalisation présentés par la suite se différencient dans la façon de supporter le trafic de la couronne interne.

On présente tout d'abord, en relation avec les figures 1 et 2, le premier mode de réalisation du procédé de l'invention. Dans ce cas, le trafic de la couronne interne est supporté par une seule seconde station de base BTS 5 associée à une cellule omnidirectionnelle CELLULE 5.

On notera que, bien que les cellules sectorisées CELLULES 1 à CELLULES 4 qui leur sont associées couvrent également la couronne interne, les premières stations de base BTS 1 à BTS 4 ne participent pas au support du trafic de la couronne interne. Afin d'éviter tout problème dû à cette double couverture radio, on peut prévoir :
- un réglage relatif des niveaux de puissance d'émission des émetteurs Tx 1 à Tx 4 des premières stations de base BTS 1 à BTS 4 d'une part, et des émetteurs Tx 5₁ à Tx 5₃ de la seconde station de base BTS 5 d'autre part ;
- que les premières stations de base BTS 1 à BTS 4 font partie d'un premier ensemble de cellules, tandis que la seconde station de base BTS 5 fait partie d'un autre ensemble ce ;
- les deux ensembles de cellules (qui peuvent être connectés à un même BSC) utilisent chacun un jeu de fréquences distinct.

Dans l'exemple présenté sur la figure 2, la seconde station de base BTS 5 associée à la cellule omnidirectionnelle CELLULE 5 comprend une antenne A5, omnidirectionnelle et de faible portée, qui est connectée, via un combineur 50, à :
- un second dispositif d'émission/réception TRx 5₁ comprenant un émetteur Tx 5₁ utilisant la porteuse BCCH f_{BCCH, 5} propre à la seconde station de base BTS 5, et
- un troisième et un quatrième dispositif d'émission/réception TRx 5₂, TRx 5₃ comprenant chacun un émetteur Tx 5₂, Tx 5₃ utilisant une porteuse f₆, f₇ distincte de la porteuse BCCH f_{BCCH, 5} propre à la seconde station de base BTS 5.

Les second, troisième et quatrième dispositifs d'émission/réception TRx 5₁, TRx 5₂ et TRx 5₃ comprennent soit chacun un récepteur Rx 5₁, Rx 5₂ et Rx 5₃, soit un récepteur commun Rx 5 (qui est large bande dans le second cas).

Il est clair que le nombre de dispositif d'émission/réception compris dans la seconde station de base BTS 5 dépend de la quantité de trafic à écouler dans la couronne interne. Ainsi, si cette quantité de trafic est suffisamment faible, le seul second dispositif d'émission/réception TRx 5₁ peut suffire, et est alors connecté directement (sans combineur) à l'antenne A5.

Afin de réduire les coûts en matériel, on peut limiter la plage dynamique d'entrée et/ou les porteuses pouvant être reçues par le récepteur Rx 5 commun aux second, troisième et quatrième dispositifs d'émission/réception TRx 5₁, TRx 5₂ et TRx 5₃.

En effet, la plage dynamique de ce récepteur commun RX 5 peut être limitée à la sous-plage dynamique haute précitée, puisqu'il est destiné à recevoir uniquement des signaux provenant de stations mobiles se trouvant dans la couronne interne.

De même, ce récepteur commun RX 5 peut être limitée en réception aux porteuses du seconde sous-ensemble de porteuses précité.

On présente maintenant, en relation avec les figures 3 et 4, le second mode de réalisation du procédé de l'invention. Dans ce cas, le trafic de la couronne interne est également supporté par les premières stations de base BTS 1 à BTS 4. En d'autres termes, chaque première station de base BTS 1 à BTS 4 supporte :
- non seulement le trafic dans la partie externe 12, 22, 32, 42 de la cellule sectorisée CELLULE 1 à CELLULE 4 à laquelle elle est associée (c'est-à-dire, sur la figure 3, dans la partie non hachurée),
- mais également le trafic dans la partie interne 11, 21, 31, 41 de la cellule sectorisée CELLULE 1 à CELLULE 4 à laquelle elle est associée (c'est-à-dire, sur la figure 3, dans la partie hachurée).

Pour qu'une même porteuse BCCH puisse être utilisée aussi bien dans la partie externe que dans la partie interne d'une même cellule sectorisée, chaque première station de base BTS 1 à BTS 4 comprend également :
- dans son unique premier dispositif d'émission/réception TRx 1 à TRx 4, un second récepteur Rx 1_{H} à Rx 4_{H} réglé sur la sous-plage dynamique haute précitée;
- des moyens (non représentés) permettant de détecter, à partir de signaux émis par une station mobile et reçus par le premier Rx 1_{B} à Rx 4_{B} ou le second Rx 1_{H} à Rx 4_{H} récepteur, dans quelle couronne, interne ou externe, se trouve cette station mobile.

Ainsi, dans chaque cellule sectorisée CELLULE 1 à CELLULE 4, le premier récepteur Rx 1_{B} à Rx 4_{B} permet de recevoir des signaux émis par une station mobile se trouvant dans la partie interne 11, 21, 31, 41 de cette cellule sectorisée, tandis que le second récepteur Rx 1_{H} à Rx 4_{H} permet de recevoir des signaux émis par une station mobile se trouvant dans la partie externe 12, 22, 32, 42 de cette cellule sectorisée. En d'autre termes, chaque cellule sectorisée est entièrement couverte en réception de porteuse BCCH.

Les signaux émis par une station mobile, et que les premier Rx 1_{B} à Rx 4_{B} et second Rx 1_{H} à Rx 4_{H} récepteurs peuvent recevoir, sont par exemple des paliers (ou bursts en langue anglaise) émis par cette station mobile dans le canal d'accès aléatoire (RACH, pour Random Access CHannel en langue anglaise) dans le but d'accéder au réseau de radiocommunication. Ces "RACH bursts" sont émis sur la porteuse BCCH de la voie montante (qui est associée à la porteuse BCCH f_{BCCH, 1} à f_{BCCH, 4} de la voie descendante pour constituer le canal BCCH bidirectionnel).

Pour chaque "RACH burst" reçu par l'un de ses premier et second récepteurs, chaque première station de base BTS 1 à BTS 4 calcule la distance approximative de la station mobile par rapport au site d'émission/réception 30, en fonction du temps mis par ce "RACH burst" pour arriver jusqu'au site. Ainsi, on détermine dans quelle couronne, interne ou externe, se trouve la station mobile. De tels moyens de calcul, dits de type TOA (pour Time Of Arrival en langue anglaise) sont classiques dans le domaine GSM.

Ainsi, chaque première station de base BTS 1 à BTS 4 alloue à une station mobile:
- soit un canal de trafic supporté par le premier dispositif d'émission/réception TRx 1 à TRx 4 et utilisant le premier récepteur Rx 1_{B} à Rx 4_{B}, si cette station mobile se trouve dans la partie externe de la cellule, c'est-à-dire dans la couronne externe,
- soit un canal de trafic supporté par le second dispositif d'émission/réception TRx 1' à TRx 4' et utilisant un troisième récepteur (cf ci-dessous), si elle se trouve dans la partie interne de la cellule, c'est-à-dire dans la couronne interne.

Afin de réduire encore les coûts en matériel, on peut également limiter les porteuses pouvant être reçues par le second récepteur Rx 1_{H} à Rx 4_{H} au premier sous-ensemble de porteuses précité.

Pour que chaque première station de base BTS 1 à BTS 4 puisse également supporter le trafic dans la partie interne 11, 21, 31, 41 de sa cellule sectorisée, elle comprend en outre une antenne supplémentaire A1' à A4', directive et de faible portée, qui est connectée à un ou plusieurs seconds dispositifs d'émission/réception TRx 1' à TRx 4'.

Dans l'exemple présenté sur la figure 4, l'antenne supplémentaire A1' à A4' de chaque première station de base BTS 1 à BTS 4 est connectée directement à un unique second dispositif d'émission/réception TRx 1' à TRx 4' qui comprend un émetteur Tx 1' à Tx 4' (utilisant une porteuse f₁' à f₄' distincte de la porteuse BCCH f_{BCCH, 1} à f_{BCCH, 4} propre à cette première station de base), et un troisième récepteur Rx 1' à Rx 4'.

Il est clair que le nombre de dispositif d'émission/réception connecté à chaque antenne supplémentaire A1' à A4' dépend de la quantité de trafic à écouler dans la partie interne 11, 21, 31, 41 de chaque cellule sectorisée CELLULE 1 à CELLULE 4. Ainsi, si la quantité de trafic le nécessite, chaque antenne supplémentaire A1' à A4' de chaque première station de base BTS 1 à BTS 4 peut être connectée, via un combineur, à plusieurs (et non pas un seul comme sur la figure 4) dispositifs d'émission/réception.

Afin de réduire les coûts en matériel, on peut limiter la plage dynamique d'entrée et/ou les porteuses pouvant être reçues par le troisième récepteur Rx 1' à Rx 4' de l'unique second dispositif d'émission/réception TRx 1' à TRx 4' connecté à chaque antenne supplémentaire A1' à A4'.

En effet, la plage dynamique de chacun de ces troisièmes récepteurs Rx 1' à Rx 4' peut être limitée à la sous-plage dynamique haute précitée, puisqu'il est destiné à recevoir uniquement des signaux provenant de stations mobiles se trouvant dans la couronne interne.

De même, chacun de ces troisièmes récepteurs Rx 1' à Rx 4' peut être limité en réception au second sous-ensemble de porteuses précité.

Il est clair que l'invention n'est pas limitée au deux modes de réalisation particuliers présentés ci-dessus.

## Revendications

1. Procédé de configuration d'une pluralité de cellules géographiques liées à un même site d'émission/réception (10 ; 30) dans un système de radiocommunication numérique cellulaire, ledit site d'émission/réception accueillant une pluralité de stations de base associées chacune à une desdites cellules et définies chacune par une porteuse radio distincte, dite porteuse BCCH, fournissant notamment un canal de diffusion, ledit site d'émission/réception étant situé dans une zone pouvant être décomposée en :
- une couronne interne présentant une première densité de trafic, et au centre de laquelle se trouve ledit site d'émission/réception,
- une couronne externe présentant une seconde densité de trafic inférieure à ladite première densité de trafic, et entourant ladite couronne interne,
caractérisé en ce que le trafic de ladite couronne externe est supporté par au moins deux premières stations de base (BTS 1 à BTS 4) associées chacune à une cellule sectorisée (CELLULE 1 à CELLULE 4),
et en ce que chaque première station de base comprend une antenne (A1 à A4), directive et de grande portée, qui est connectée directement à un unique premier dispositif d'émission/réception (TRx 1 à TRx 4), ledit premier dispositif d'émission/réception comprenant un émetteur (Tx 1 à Tx 4) utilisant la porteuse BCCH (f_{BCCH, 1} à f_{BCCH, 4}) propre à ladite première station de base.

2. Procédé selon la revendication 1, caractérisé en ce que le trafic de ladite couronne externe est supporté par quatre premières stations de base (BTS 1 à BTS 4), associées chacune à une cellule sectorisée à 90° (CELLULE 1 à CELLULE 4).

3. Procédé selon l'une quelconque des revendications 1 et 2, caractérisé en ce que le trafic de ladite couronne interne est supporté par une seule seconde station de base (BTS 5) associée à une cellule omnidirectionnelle (CELLULE 5), lesdites au moins deux premières stations de base (BTS 1 à BTS 4) ne participant pas au support du trafic de ladite couronne interne.

4. Procédé selon la revendication 3, caractérisé en ce que ladite seconde station de base (BTS 5) associée à ladite cellule omnidirectionnelle comprend une antenne (A5), omnidirectionnelle et de faible portée, qui est connectée :
- soit directement à un unique second dispositif d'émission/réception comprenant un émetteur utilisant la porteuse BCCH propre à ladite seconde station de base ;
- soit, via un combineur (50), à :
* un second dispositif d'émission/réception (TRx 5₁) comprenant un émetteur (Tx 5₁) utilisant la porteuse BCCH (f_{BCCH, 5}) propre à ladite seconde station de base (BTS 5), et
* au moins un troisième dispositif d'émission/réception (TRx 5₂, TRx 5₃) comprenant un émetteur (Tx 5₂, Tx 5₃) utilisant une porteuse (f₆, f₇) distincte de la porteuse BCCH (f_{BCCH, 5}) propre à ladite seconde station de base.

5. Procédé selon l'une quelconque des revendications 3 et 4, caractérisé en ce que lesdites au moins deux premières stations de base font partie d'un premier ensemble de cellules, ladite seconde station de base faisant partie d'un second ensemble de cellules distinct dudit premier ensemble de cellules.

6. Procédé selon la revendication 5, caractérisé en ce que lesdits premier et second ensembles de cellules utilisent chacun un jeu de fréquences distinct.

7. Procédé selon l'une quelconque des revendications 1 et 2, caractérisé en ce que lesdites premières stations de base (BTS 1 à BTS 4) supportent également le trafic de ladite couronne interne, chaque première station de base comprenant en outre à cet effet une antenne supplémentaire (A1' à A4'), directive et de faible portée, qui est connectée à au moins un second dispositif d'émission/réception (TRx 1' à TRx 4') comprenant un émetteur (Tx 1' à Tx 4') utilisant une porteuse (f₁' à f₄') distincte de ladite porteuse BCCH (f_{BCCH, 1} à f_{BCCH, 4}) propre à ladite première station de base.

8. Procédé selon la revendication 7, caractérisé en ce que ladite antenne supplémentaire (A1' à A4') est connectée :
- soit directement à un unique second dispositif d'émission/réception (TRx 1' à TRx 4');
- soit, via un combineur, à au moins deux seconds dispositifs d'émission/réception.

9. Procédé selon l'une quelconque des revendications 1 à 8, caractérisé en ce que la plage dynamique des signaux reçus au niveau dudit site (10 ; 30) est divisée en deux sous-plages dynamiques se chevauchant, à savoir :
- une sous-plage dynamique basse, pour la réception de signaux émis par une station mobile se trouvant dans ladite couronne externe,
- une sous-plage dynamique haute, pour la réception de signaux émis par une station mobile se trouvant dans ladite couronne interne,
et en ce que ledit premier dispositif d'émission/réception (TRx 1 à TRx 4) de chacune desdites premières stations de base (BTS 1 à BTS 4), permettant de supporter le trafic de ladite couronne externe, comprend un premier récepteur (Rx 1 à Rx 4 ; Rx 1_{H} à Rx 4_{H}) réglé sur ladite sous-plage dynamique basse.

10. Procédé selon la revendication 9 et l'une quelconque des revendications 3 à 6, lesdites premières stations de base ne participant pas au support du trafic de ladite couronne interne, caractérisé en ce que ladite seconde station de base (BTS 5), qui supporte le trafic de ladite couronne interne, comprend un second récepteur (Rx 5) réglé sur ladite sous-plage dynamique haute.

11. Procédé selon la revendication 10 et la revendication 4, caractérisé en ce que ledit second récepteur (Rx 5) est :
- soit compris dans ledit unique second dispositif d'émission/réception de ladite seconde station de base ;
- soit large bande et commun à l'ensemble desdits second (TRx 5₁) et troisième (TRx 1' à TRx 4') dispositifs d'émission/réception de ladite seconde station de base (BTS 5).

12. Procédé selon la revendication 9 et l'une quelconque des revendications 7 et 8, lesdites premières stations de base supportant également le trafic de ladite couronne interne, caractérisé en ce que chaque première station de base (BTS 1 à BTS 4) comprend également:
- dans ledit unique premier dispositif d'émission/réception (TRx 1 à TRx 4), un second récepteur (Rx 1_{H} à Rx 4_{H}) réglé sur ladite sous-plage dynamique haute,
- dans ledit au moins un second dispositif d'émission/réception (TRx 5₁ à TRx 5₃), un troisième récepteur (Rx 1' à Rx 4') réglé sur ladite sous-plage dynamique haute,
et en ce que chaque première station de base comprend également des moyens de détecter, à partir de signaux émis par une station mobile et reçus par l'un desdits premier et second récepteurs, dans quelle couronne, interne ou externe, se trouve ladite station mobile, de façon à allouer à celle-ci :
- soit un canal de trafic supporté par le premier dispositif d'émission/réception (TRx 1 à TRx 4) et utilisant ledit premier récepteur (Rx 1_{B} à Rx 4_{B}), si elle se trouve dans ladite couronne externe,
- soit un canal de trafic supporté par ledit au moins un second dispositif d'émission/réception (TRx 1' à TRx 4') et utilisant ledit troisième récepteur (Rx 1' à Rx 4'), si elle se trouve dans ladite couronne interne.

13. Procédé selon la revendication 12 et la revendication 8, caractérisé en ce que ledit troisième récepteur (Rx 1' à Rx 4') est :
- soit compris dans ledit unique second dispositif d'émission/réception (TRx 1' à TRx 4') connecté à ladite antenne supplémentaire ;
- soit large bande et commun à l'ensemble desdits seconds dispositifs d'émission/réception connectés via le combineur à ladite antenne supplémentaire.

14. Procédé selon l'une quelconque des revendications 9 à 13, caractérisé en ce que l'ensemble des porteuses utilisées au niveau dudit site (10 ; 30) est divisé en deux sous-ensembles de porteuses, à savoir :
- un premier sous-ensemble de porteuses, incluant les porteuses utilisées dans ladite couronne externe, et notamment les porteuses BCCH (f_{BCCH, 1} à f_{BCCH, 4}) propres auxdites premières stations de base,
- un second sous-ensemble de porteuses, incluant les porteuses utilisées dans ladite couronne interne, et notamment les porteuses (f_{BCCH, 5}, f₆, f₇ ; f₁' à f₄') distinctes desdites porteuses BCCH propres auxdites premières stations de base,
et en ce que ledit premier récepteur (Rx 1 à Rx 4 ; Rx 1_{B} à Rx 4_{B}) de chacune desdites premières stations de base est limité en réception au premier sous-ensemble de porteuses.

15. Procédé selon la revendication 14 et l'une quelconque des revendications 10 et 11, caractérisé en ce que ledit second récepteur (Rx 5) compris dans ladite seconde station de base (BTS 5) est limité en réception au second sous-ensemble de porteuses.

16. Procédé selon la revendication 14 et l'une quelconque des revendications 12 et 13, caractérisé en ce que ledit second récepteur (RX 1_{H} à Rx 4_{H}) de chaque première station de base (BTS 1 à BTS 4) est limité en réception au premier sous-ensemble de porteuses, et en ce que ledit troisième récepteur (Rx 1' à Rx 4') de chaque seconde station de base est limité en réception au second sous-ensemble de porteuses.

17. Site d'émission/réception (10 ; 30) dans un système de radiocommunication numérique cellulaire, ledit site d'émission/réception étant du type accueillant une pluralité de stations de base associées chacune à une desdites cellules et définies chacune par une porteuse radio distincte, dite porteuse BCCH, fournissant notamment un canal de diffusion, ledit site d'émission/réception étant situé dans une zone pouvant être décomposée en une couronne interne, présentant une première densité de trafic et au centre de laquelle se trouve ledit site d'émission/réception, et une couronne externe, présentant une seconde densité de trafic inférieure à ladite première densité de trafic et entourant ladite couronne interne,
caractérisé en ce qu'il comprend au moins deux premières stations de base (BTS 1 à BTS 4) associées chacune à une cellule sectorisée (CELLULE 1 à CELLULE 4), de façon à supporter le trafic de ladite couronne externe,
et en ce que chacune desdites premières stations de base comprend une antenne (A1 à A4), directive et de grande portée, qui est connectée directement à un unique premier dispositif d'émission/réception (TRx 1 à TRx 4) comprenant un émetteur (Tx 1 à Tx 4) utilisant la porteuse BCCH (f_{BCCH, 1} à f_{BCCH, 4}) propre à ladite première station de base.

18. Site selon la revendication 17, caractérisé en ce que ledit unique premier dispositif d'émission/réception (TRx 1 à TRx 4) de chacune desdites premières stations de base comprend un premier récepteur (Rx 1 à Rx 4 ; Rx 1_{B} à Rx 4_{B}) réglé sur une sous-plage dynamique basse, de façon à permettre la réception de signaux émis par une station mobile se trouvant dans ladite couronne externe.

19. Site selon l'une quelconque des revendications 17 et 18, caractérisé en ce que ledit premier récepteur (Rx 1 à Rx 4 ; Rx 1_{B} à Rx 4_{B}) de chacune desdites premières stations de base (BTS 1 à BTS 4) est limité en réception à un sous-ensemble de porteuses incluant les porteuses utilisées dans ladite couronne externe, et notamment les porteuses BCCH (f_{BCCH, 1} à f_{BCCH, 4}) propres auxdites premières stations de base.
